# FASCICULE DE BREVET EUROPEEN

(11) **EP 4 007 836 B1**
(45) Date de publication et mention de la délivrance du brevet: **07.09.2022**
(21) Numéro de dépôt: 20807806.3
(22) Date de dépôt: 23.11.2020
(51) Int. Cl.: E04H 4/10, A01G 9/14, A63C 19/12, E04F 10/06, A01G 9/22, B60J 7/08

(54) **DISPOSITIF DE COUVERTURE D'UNE SURFACE COMPRENANT DES MOYENS DE VERROUILLAGE DISCRETS**
VORRICHTUNG ZUM ABDECKEN EINER OBERFLÄCHE MIT DISKRETEN VERRIEGELUNGSMITTELN
DEVICE FOR COVERING A SURFACE COMPRISING DISCREET LOCKING MEANS

(30) Priorité: 28.11.2019 BE 201905844
(43) Date de publication de la demande: 08.06.2022
(73) Titulaire: Becoflex, 7110 Strepy-Bracquegnies (BE)
(72) Inventeur: COENRAETS, Benoît, 7110 Strepy-Bracquegnies (BE)
(74) Mandataire: Connor, Marco Tom
(86) Numéro de dépôt international: PCT/EP2020/083046
(87) Numéro de publication internationale: WO 2021/105053

(56) Documents cités:
- EP-A2- 0 106 606
- EP-B1- 0 106 606
- WO-A1-03/106801
- WO-A1-2017/130053
- BE-A3- 1 018 230

## Description

### DOMAINE DE L'INVENTION

L'invention se rapporte à un dispositif de couverture d'une surface, aisé à mettre en œuvre et répondant au mieux aux exigences de l'application concernée. En particulier, la présente invention concerne un dispositif de couverture dans lequel la couverture comprend un élément en saillie de fixation particulier permettant l'ancrage réversible des bords longitudinaux de la couverture lors de son déploiement, incluant des éléments discrets. Ceci facilite grandement la réparation de l'élément en saillie en cas de dommages, comparé à un bourrelet continu.

### ARRIÈRE-PLAN TECHNOLOGIQUE

On applique des couvertures sur des surfaces pour des raisons qui dépendent de la nature de ces surfaces. Ainsi, dans le cas d'un bassin tel qu'une piscine la couverture peut éviter la pollution par des feuilles ou des animaux, peut faire économiser de l'énergie, de l'eau et des réactifs et peut ou doit assurer la sécurité des personnes en particulier des enfants. Dans un bassin de dessalement ou d'autres traitements d'un fluide, une couverture permet d'éviter la dilution de liquide due à la pluie ou l'évaporation excessive due à la chaleur.

Lorsqu'il s'agit d'un terrain de sport tel qu'un terrain de tennis externe en terre battue ou gazon, une couverture permet de le protéger contre les intempéries, et en particulier une pluie intermittente. Par ailleurs, une caisse de véhicule est couverte notamment pour assurer la stabilité de la charge à la dépression causée par le déplacement du véhicule et la protéger contre les intempéries. On utilise également des couvertures en tant que stores pour serres, jardins d'hiver ou fenêtres de véhicules afin d'éviter toute surchauffe à l'intérieur, et en tant que protection solaire pour auvents de terrasse.

Dans tous les cas de figure, on recherche généralement un dispositif de couverture économique permettant une mise à couvert et à découvert aisée, sûre, reproductible et rapide, nécessitant un minimum d'intervention humaine et, surtout, ayant une durée de vie aussi longue que possible. De nombreux dispositifs de recouvrement d'une surface ont été développés, allant des modèles basiques aux plus sophistiqués, Par exemple, un premier dispositif tout à fait basique utilisé dans le cas d'une piscine comprend une couverture gonflable ou non que l'on déroule, étend et fixe manuellement sur les bords de la piscine. Ce type de dispositif est illustré par exemple dans les documents US6691334, GB2379163 et FR2652373. Il est clair qu'ici compte tenu de la manutention et du stockage, seules des piscines d'assez petite taille sont concernées.

Beaucoup de dispositifs utilisent un tambour rotatif pour enrouler et stocker la couverture lorsque la surface est découverte. On peut classer les dispositifs de couverture d'une surface utilisant un tambour rotatif en deux catégories.
(a) Dispositifs comprenant un tambour fixé à l'une des extrémités transversales de la surface à protéger. La couverture est déployée par traction, en se déroulant du tambour et est traînée le long de la surface lors de son déploiement et aussi de son retrait. Ceci génère des frictions importantes qui augmentent la force nécessaire aux déploiement et retrait de la couverture, et accélère l'usure de la couverture. Des dispositifs de couverture automatiques sont illustrés notamment dans les documents suivants : US3574979, GB2199741, US2005/0097834, CA2115113, US2001/0023506, US5930848, US400190..
(b) Dispositifs dans lesquels le tambour motorisé est monté sur un mécanisme de translation longitudinale. Celui-ci déplace le tambour au-dessus de la surface à couvrir ce qui permet littéralement de « poser» la couverture sur la surface, lors de son déploiement, en la déroulant simultanément du tambour pendant son déplacement longitudinal, puis de la soulever, lors de son retrait, en l'enroulant simultanément sur le tambour. La couverture ne glisse donc pas sur la surface ni lors de son déploiement ni lors de son retrait. Des exemples de dispositifs automatiques de ce type sont divulgués par exemple dans les documents suivants: WO2005/026473, FR2900951, DE2257231, FR2893651, FR2789425, FR2743502, EP1719858.

La présente invention concerne les dispositifs (b) dans lesquels le tambour motorisé est monté sur un mécanisme de translation longitudinale pour les avantages qu'ils présentent par rapport aux dispositifs (a) comprenant un tambour fixé à une extrémité transversale.

Dans la présente demande, les termes « longitudinal » « transversal » et leurs dérivés se réfèrent respectivement à la direction de déplacement du tambour et à la direction de l'axe de révolution de celui-ci.

Dans beaucoup d'applications, il est avantageux de verrouiller les bords longitudinaux de la couverture au fur et à mesure qu'elle se déploie. Ceci est particulièrement intéressant dans le cas de piscines, car cela permet d'éviter que des personnes s'engageant sur la couverture ne soient précipitées dans l'eau à travers un espace entre le bord longitudinal de la couverture et la margelle de la piscine. En outre, étanchéifier la zone de contact périphérique entre la couverture et les bords longitudinaux de la surface peut éviter l'introduction dans la piscine de saletés, feuilles mortes et brindilles ainsi que de petits animaux tels que des souris ou des serpents. Cela ouvre aussi la possibilité de pressuriser le volume d'air se trouvant entre la surface de l'eau et la surface inférieure de la couverture, afin de gonfler celle-ci. Des dispositifs plus sophistiques ont été proposés permettant de fixer de manière réversible les bords longitudinaux de la couverture lors de son déploiement, tel que dans le document FR2803769 qui prévoit un système de fixation des bords longitudinaux de la couverture constitué de tronçons de grilles se soulevant puis se rabattant tronçon par tronçon sur lesdits bords longitudinaux de la couverture en maintenant ces bords à l'intérieur d'un caniveau au fur à mesure du déroulement de celle-ci. Dans cette conception, les bords longitudinaux de la couverture sont pincés sans être verrouillés, ce qui procure une moindre sécurité en particulier dans le cas de piscines.

Un système avantageux permettant simultanément de fixer les bords longitudinaux de la couverture lors de son déploiement et d'exercer une force de traction transversale sur celle-ci pour la tendre parfaitement a été divulgué dans WO2010/010152, WO2010054960 et dans WO2014064138. Dans ces dispositifs, les bords longitudinaux de la couverture sont munis d'un jonc ou bourrelet continu qui est introduit dans l'ouverture orientée vers le haut d'un rail en forme de profilé de section en « U », avec une ou deux ailettes refermant partiellement ladite ouverture. Le bourrelet venant se glisser sous une ailette et retenue dans cette position par des moyens de fixations adéquats, permet de fixer solidement les bords longitudinaux de la couverture.

Les systèmes de verrouillage décrits dans WO2010010152, WO2010054960 et WO2014064138 comprennent :
(a) deux rails s'étendent le long des cotés longitudinaux et de part et d'autre de la surface à couvrir. Les rails sont constitués d'un profilé ayant une ouverture vers l'extérieur, (i.e., orientée à l'opposé de la surface à couvrir) sur une de ses faces et comprenant une ou deux ailes fermant partiellement de part et d'autre ladite ouverture (s'il n'y a qu'une aile elle est située du côté adjacent à la surface à couvrir) ;
(b) les bords longitudinaux de la couverture comprennent chacun au moins un bourrelet continu de préférence sensiblement cylindrique, muni surtout son long d'une bande fixée à au moins une face de la couverture ;
(c) des moyens d'engagement permettant d'engager ledit bourrelet continu dans l'ouverture formée par la ou les ailes du rail et de le glisser sous une des ailes et des moyens de fixation pour empêcher que le bourrelet continu puisse sortir de ladite ouverture, de sorte que la couverture soit verrouillée au rail.

Un tel système de verrouillage permet de glisser le bourrelet continu dans l'ouverture du rail et de l'y coincer entraînant ainsi la fixation continue dans ledit rail du bord longitudinal correspondant de la couverture et de maintenir par celui-ci la couverture au-dessus de la surface à couvrir même en cas de sollicitations mécaniques très élevées dues par exemple à une différence de pression (i.e., surpression ou dépression) entre les deux surfaces de la couverture, ou au poids de la couverture. Dans le cas des piscines, il confère la sécurité en cas d'accès (autorisé ou non) sur la couverture. La résistance du système de verrouillage peut facilement atteindre une plage de 5 à 10 kN/m (500 à 1000 kg/m) qui est suffisante pour de nombreuses applications. Selon les matériaux utilisés, de plus hautes résistances de verrouillage peuvent être atteintes.

Les bourrelets continus d'une telle couverture sont cependant soumis à de très importantes sollicitations mécaniques, de frottement, d'exposition aux UV et, dans le cas de piscines, d'exposition à des vapeurs chlorées. Ces sollicitations réduisent considérablement la durée de vie des bourrelets continus. Comme ils sont cousus, collés et/ou soudés à la couverture de manière généralement irréversible, il n'est pas facile, voire impossible, de les remplacer et toute la couverture doit ainsi être remplacée, ce qui a un coût et un impact écologique importants.

Il serait intéressant d'avoir un système de verrouillage aussi efficace que celui avec des bourrelets continus décrit ci-dessus et qu'il serait possible de réparer en cas d'usure ou de rupture. La présente invention propose une couverture comprenant un élément en saillie le long de ses bords longitudinaux qui se distingue d'un bourrelet continu et qui permet à la fois, d'une part, de verrouiller fermement les côtés longitudinaux de la couverture dans les rails lors du déploiement de la couverture et de les déverrouiller lors de son retrait et, d'autre part, de les réparer ou remplacer en cas de rupture ou usure

### RÉSUMÉ DE L'INVENTION

L'invention est telle que définie dans la revendication principale et des variantes préférées sont définies dans les revendications dépendantes. La présente invention comporte notamment un dispositif de couverture d'une surface comprenant les éléments suivants.
(a) Une couverture sensiblement rectangulaire ayant deux bords longitudinaux opposés l'un à l'autre et deux bords transversaux opposés l'un à l'autre. Chaque bord longitudinal est muni d'un élément en saillie, s'étendant le long dudit bord.
(b) Un tambour de rayon monté à rotation apte à enrouler et dérouler la couverture. Le tambour est monté sur un mécanisme de translation longitudinale le long de rails placés de part et d'autre de ladite surface. Chaque rail est constitué d'un profilé ayant une ouverture sur une de ses faces et orientée à l'opposé de la surface à couvrir, et étant muni d'un élément de verrouillage (6a, 6c). Le mécanisme de translation permet la translation longitudinale du tambour dans une première direction entraînant le déroulement de la couverture et son déploiement au-dessus de la surface à couvrir (3) et dans une seconde direction entraînant l'enroulement de la couverture et son retrait de ladite surface.
(c) Une poulie de renvoi est pourvue de chaque côté de la surface à couvrir permettant de guider et positionner ledit élément en saillie de chaque bord longitudinal de la couverture vis-à-vis l'ouverture du rail correspondant lors de la translation dans la première direction du tambour entraînant le déroulement de la couverture,
(d) un système de verrouillage continu de l'élément en saillie des bords longitudinaux de la couverture dans l'ouverture desdits rails, permettant, une fois que l'élément en saillie ait été engagé dans l'ouverture, de le verrouiller avec l'élément de verrouillage du rail correspondant au fur et à mesure du déroulement de la couverture et, lors de la translation du tambour dans la seconde direction, de libérer l'élément en saillie en lui permettant de se désenclencher de l'élément de verrouillage au fur et à mesure de l'enroulement de la couverture,

Selon la présente invention, l'élément en saillie de chaque bord longitudinal de la couverture comprend une multitude d'éléments discrets distribués le long de chaque bord longitudinal. Les éléments discrets ont une longueur moyenne (L) et sont disposés côte-à-côte le long du bord longitudinal correspondant, séparés les uns des autres par une distance moyenne (d) supérieure ou égale à 0 et est de préférence inférieur à L, formant des unités de saillie de longueur moyenne (Lu = L + d), où les longueur (L) et distance (d) moyennes sont mesurées parallèlement aux rails (6) lorsque la couverture est déployée. La longueur moyenne (Lu) des unités de saillie ne dépasse pas 2 π R / N, dans lequel N ≥ 10 est un nombre réel. Enfin, chaque élément discret a une rigidité mécanique en flexion au moins deux fois supérieure à celle de la couverture.

Dans une variante préférée de l'invention, l'élément de verrouillage comprend une aile fermant partiellement le côté de l'ouverture de chaque rail adjacent à la surface à couvrir. Chaque élément discret forme un crochet ayant un profil en « L » ou en « j », ayant
∘ une portion alignée en continu avec la surface de la couverture et fixée au bord longitudinal correspondant de la couverture, et
∘ une portion transverse formant le crochet, s'étendant transversalement par rapport à la portion alignée ; le crochet est configuré pour s'accrocher à l'aile.

Dans une autre variante préférée de l'invention, l'élément de verrouillage comprend un ou plusieurs aimants positionnés dans l'ouverture de chaque rail. Chaque élément discret comprend au moins une portion ferromagnétique configurée pour faire face à et être attirée par l'un ou plusieurs aux aimants lorsqu'un élément discret est introduit dans l'ouverture desdits rails. Alternativement, les éléments discrets peuvent comprendre une portion aimantée, et les rails peuvent comprendre une portion ferromagnétique attirée par la portion aimantée des éléments discrets.

Dans une autre variante préférée de l'invention, l'élément de verrouillage comprend une aile fermant partiellement le côté de l'ouverture de chaque rail opposé à la surface à couvrir. Chaque élément discret comprend une protrusion s'étendant dans la direction opposée à la couverture et en alignement avec la couverture. La protrusion est configurée pour se glisser sous l'aile lorsqu'un élément discret est introduit dans l'ouverture desdits rails.

Dans une autre variante préférée de l'invention, l'élément de verrouillage et les éléments discrets forment un système d'assemblage par encliquetage comprenant une protrusion s'encliquetant dans une dépression lorsqu'un élément discret est introduit dans l'ouverture desdits rails.

Le système de verrouillage comprend de préférence deux courroies flexibles, chacune étant apte,
- lors de la translation du tambour dans la première direction, à se déposer au fur et à mesure du déroulement de la couverture dans l'ouverture du rail correspondant une fois que les éléments discrets aient été engagés dans l'ouverture de ce dernier et ainsi de les y coincer et,
- lors de la translation du tambour dans la deuxième direction, à se retirer de ladite ouverture, libérant ainsi les éléments discrets et leur permettant de se désenclencher du rail correspondant au fur et à mesure de l'enroulement de la couverture.

Dans une variante de l'invention, le mécanisme de translation comprend de préférence un chariot monté sur les rails et surplombant transversalement la surface à couvrir et supportant le tambour comprenant à chacune de ses extrémités :
- une roue d'entraînement dont l'axe de rotation est parallèle à celui dudit tambour ;
- au moins une roulette avale et une roulette amont reposant sur les rails ou sur une surface adjacente aux rails, et permettant la translation longitudinale du chariot, et étant montées la première en aval et la seconde en amont de la roue d'entraînement dans la première direction de déplacement, et constituant avec celle-ci un triangle dont la roue d'entraînement forme un sommet supérieur.

Dans cette variante, la roulette avale et la roulette amont reposent de préférence sur le rail correspondant. Le mécanisme de translation peut de préférence comprendre deux courroies flexibles fixées uniquement à chacune de leurs extrémités aux quatre coins de la surface à couvrir et s'étendent le long des bords longitudinaux de la surface à couvrir de la manière suivante :
- elles sont disposées dans l'ouverture des rails dans les sections latérales comprises entre un point de fixation et la roulette la plus proche dudit point de fixation, et verrouillant ainsi les éléments discrets introduits dans l'ouverture dans la section latérale comprenant la roulette avale,
- elles coiffent sans glissement la roue d'entraînement dans la section centrale comprise entre les deux roulettes.

De manière alternative, le mécanisme de translation comprend :
- deux courroies flexibles comprenant une face intérieure et une face extérieure séparée de la face intérieure par une épaisseur des courroies, les faces intérieure et extérieure de chaque courroie flexible étant chacune crantée, la surface intérieure de chaque courroie flexible coiffant sans glissement les roulettes amont et avale ainsi que la roue d'entraînement et
- deux crémaillères disposées le long des bords longitudinaux et parallèles à, de préférence dans l'ouverture de chaque rail ; la surface extérieure d'une portion de chacune des courroies flexibles comprise entre la roulette avale et la roulette amont correspondantes s'engrène dans la crémaillère correspondante.

Le dispositif de la présente invention comprend de préférence un patin d'enclenchement de l'élément en saillie, inséré à glissement dans chaque rail, en amont des poulies de renvois dans la première direction de translation. Le patin d'enclenchement est configuré pour mettre l'élément en saillie en contact avec l'élément de verrouillage du rail correspondant et ainsi de verrouiller l'élément en saillie dans l'ouverture du rail.

Le dispositif de couverture de la présente invention est particulièrement adéquat pour couvrir une surface sélectionnée parmi :
- un bassin rempli ou non d'un liquide tel qu'une piscine, un bassin de rétention, de traitement ou de désalinisation des eaux ;
- un terrain de sports, tel un terrain de tennis ou de cricket ;
- une caisse de véhicule,
- une surface vitrée telle une serre, un jardin d'hiver ou une fenêtre de véhicule.

Une surface peut être couverte par une couverture à l'aide d'un dispositif de couverture tel que décrit précédemment par les étapes suivantes :
(a) le tambour se trouve à une extrémité amont de la surface à couvrir, avec un bord transversal de la couverture étant fixé à cette extrémité transversale amont de la surface et le reste de la couverture étant enroulé autour du tambour,
(b) déplacer le tambour dans une première direction au-dessus de la surface à couvrir le long des rails, et ainsi dérouler du tambour la couverture qui se déploie sur la portion de surface en amont du tambour et, en même temps, guider et maintenir l'élément en saillie de chaque bord longitudinal de la couverture vis-à-vis de l'ouverture du rail correspondant au fur et à mesure que le tambour avance,
(c) mettre en contact l'élément en saillie avec l'élément de verrouillage dans l'ouverture du rail et verrouiller l'élément en saillie au rail.

### BRÈVE DESCRIPTION DES FIGURES

Ces aspects ainsi que d'autres aspects de l'invention seront clarifiés dans la description détaillée de modes de réalisation particuliers de l'invention, référence étant faite aux dessins des figures, dans lesquelles :
**Fig.1** vue d'ensemble en perspective d'une surface avec un tambour en position telle qu'une partie amont de la surface seulement est recouverte par une couverture, (a) une première variante, (b) une seconde variante et (c) détail des moyens de déplacements de la variante de la Figure 1(b).
**Fig.2** vues d'un élément en saillie comprenant des éléments discrets selon l'invention, (a) en position déployée et (b) partiellement enroulée autour d'un tambour.
**Fig.3** différentes variantes (a) à (g) d'éléments discrets selon l'invention.
**Fig.4** mécanisme de verrouillage d'un élément discret dans l'ouverture d'un rail selon une première variante de l'invention, (a) introduction de l'élément discret dans l'ouverture du rail, (b) en position verrouillée et (c) vue en perspective du dispositif de verrouillage.
**Fig.5** mécanisme de verrouillage d'un élément discret dans l'ouverture d'un rail selon une seconde variante de l'invention, (a) introduction de l'élément discret dans l'ouverture du rail, (b) en position verrouillée et (c) vue en perspective du dispositif de verrouillage.
**Fig.6** mécanisme de verrouillage d'un élément discret dans l'ouverture d'un rail selon une troisième variante de l'invention, (a) introduction de l'élément discret dans l'ouverture du rail, (b) en position verrouillée et (c) vue en perspective du dispositif de verrouillage.
**Fig.7** mécanisme de verrouillage d'un élément discret dans l'ouverture d'un rail selon une quatrième variante de l'invention, (a) introduction de l'élément discret dans l'ouverture du rail, (b) en position verrouillée et (c) vue en perspective du dispositif de verrouillage.
**Fig.8** mécanisme de verrouillage d'un élément discret dans l'ouverture d'un rail selon une cinquième variante de l'invention, (a) introduction de l'élément discret dans l'ouverture du rail, (b) en position verrouillée et (c) vue en perspective du dispositif de verrouillage.
**Fig.9** pignon de renvoi de la couverture, (a) première variante, (b) deuxième variante.
**Fig.10** mécanisme de translation comprenant une courroie selon, d'une part, (a) la variante de la Figure 1(a) et, d'autre part, (b) selon la variante de la Figure 1(b)&(c).

### DESCRIPTION DÉTAILLÉE DE MODES DE RÉALISATION PARTICULIERS

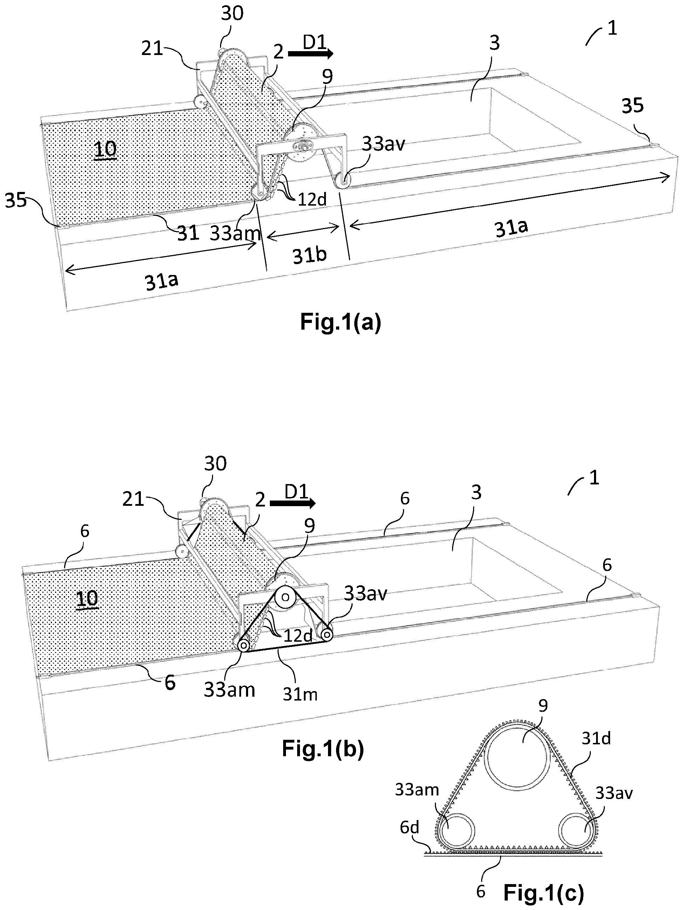

Tel que représenté à la Figure 1, le dispositif automatique de couverture (1) d'une surface (3) selon l'invention comprend une couverture (10) destinée à protéger ladite surface (3). Le dispositif (1) permet de couvrir notamment des surfaces définies par le contour d'un bassin d'eau tel qu'une piscine, bassin de traitement d'eau, station d'épuration d'eaux usées, bassin de rétention, station de désalinisation etc. Cependant, l'invention pourra être mise en œuvre dans tout domaine nécessitant la couverture d'une surface, comme par exemple un terrain de tennis en terre battue ou en gazon, une caisse de véhicule, une surface vitrée de serre, de fenêtre de véhicule tel que train ou bus, ou de jardin d'hiver, etc. D'une manière générale, on entend donc dans la présente demande par « surface » toute zone délimitée par un périmètre.

Le dispositif (1) comprend une couverture sensiblement rectangulaire ayant deux bords longitudinaux opposés l'un à l'autre et deux bords transversaux opposés l'un à l'autre, chaque bord longitudinal étant muni d'un élément (12, 12d) en saillie, s'étendant le long dudit bord,

Un premier bord transversal de la couverture est fixé à un tambour (2) de rayon R qui présente une longueur au moins égale à la largeur des bords transversaux de la couverture (10), celle-ci devant avoir des bords transversaux et longitudinaux de largeur et de longueur suffisantes, respectivement, pour couvrir toute la surface à protéger (3) lorsqu'elle est déployée. Le tambour (2) est monté à rotation autour d'un axe parallèle aux bords transversaux de la couverture. Il est ainsi monté sur un mécanisme de translation longitudinale le long de rails (6) placés de part et d'autre de ladite surface (3) et constitués chacun d'un profilé ayant une ouverture (14) sur une de ses faces et orientée à l'opposé de la surface à couvrir, et étant muni d'un élément de verrouillage (6a, 6c).

Le dispositif (1) comprend un système de fixation situé à une extrémité transversale amont de la surface à couvrir et permettant de fixer le second bord transversal de la couverture à l'extrémité transversale amont de la surface à couvrir (3). Tout type de système de fixation connu et convenant aux critères de contraintes, de sécurité et, le cas échéant d'étanchéité, selon l'application peut être utilisé à cet effet. Par exemple, le système de fixation peut comprendre une pluralité de sangles solidaires du second bord transversal de la couverture (10), lesdites sangles étant par exemple munies de crochets d'ancrage qui se fixent à l'extrémité transversale amont du contour délimitant la surface à couvrir (3). De manière alternative, on peut munir le second bord transversal de la couverture d'œillets qui viennent se fixer à l'extrémité transversale amont de la surface par l'intermédiaire d'une série de pitons, de vis, d'un câble ou tout autre moyen. Une autre variante est de coincer le bord transversal de la couverture sous une plaque de longueur correspondant à la largeur de la couverture est fixée à la surface par des vis traversant la couverture. Ces moyens d'ancrage et autres trop nombreux pour être tous mentionnés, maintiennent immobilisée l'extrémité transversale amont de la couverture (10).

Le mécanisme de translation permet la translation longitudinale du tambour (2) dans une première direction entraînant le déroulement de la couverture par rotation dans un premier sens du tambour autour de son axe et le déploiement de la couverture au-dessus de la surface à couvrir (3) et dans une seconde direction entraînant l'enroulement de la couverture par rotation dans un deuxième sens du tambour et son retrait de ladite surface (3).

La première direction de translation permet au tambour de s'éloigner de l'extrémité transversale amont de la surface et de dérouler la couverture (10) pour la déployer et couvrir la surface à protéger (3). La rotation dans le premier sens du tambour est rendue possible par le déplacement du tambour qui exerce une traction sur la couverture dont le second bord transversal est fixé à l'extrémité transversale amont. Le tambour comprend un moyen résilient tel qu'un ressort spiral qui se tend par la rotation du tambour dans le premier sens de rotation.

La deuxième direction de translation permet au tambour de se rapprocher de l'extrémité transversale amont de la surface et d'enrouler la couverture (10) pour la retirer et découvrir la surface (3). La rotation dans le deuxième sens du tambour est rendue possible par la détente du moyen résilient tel qu'un ressort spiral qui se détend et entraîne la rotation du tambour dans le deuxième sens de rotation.

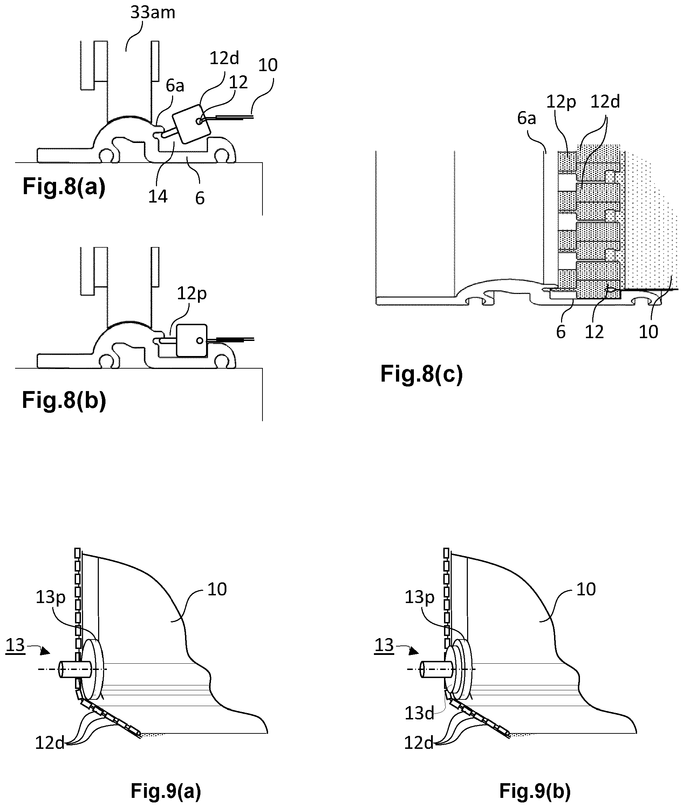

Une poulie de renvoi (13) illustrée aux Figures 9(a) & 9(b) pourvue de chaque côté de la surface à couvrir permet de guider et positionner les éléments en saillie (12, 12d) des bords longitudinaux de la couverture vis-à-vis l'ouverture (14) du rail (6) correspondant lors de la translation dans la première direction du tambour entraînant le déroulement de la couverture,

La couverture peut être en toute matière convenant à l'application en question : matériaux textiles synthétiques ou naturels, films polymériques, lattes en polymère, en métal ou en bois, etc. Elle peut être transparente, opaque ou translucide et peut former une barrière à des fluides ou au contraire être poreuse, voir même comprendre des mailles telles que dans un filet. Par exemple, pour des applications de piscines ou de bassins de traitement d'eau ou similaire, il est avantageux si la couverture comprend des trous de drainage permettant ainsi à l'eau de pluie de ne pas s'accumuler sur la couverture et évitant ainsi la formation de poches d'eau sur la surface de la couverture.

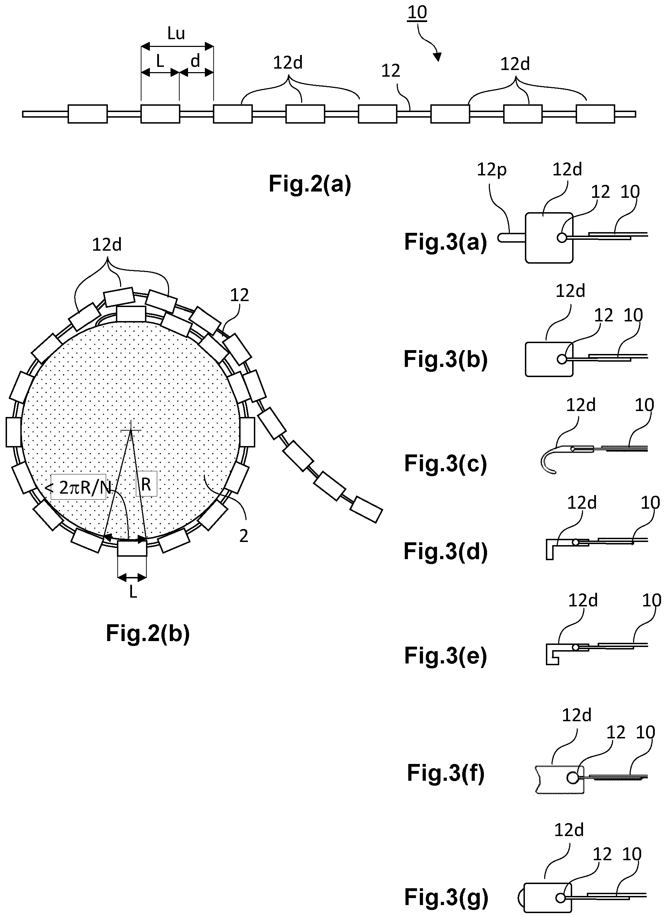

Le dispositif comprend un système de verrouillage continu de l'élément en saillie (12, 12d) des bords longitudinaux de la couverture (10) dans l'ouverture (14) desdits rails (6). Ce système de verrouillage permet, une fois que l'élément en saillie ait été engagé dans l'ouverture (14), de le verrouiller avec l'élément de verrouillage (6a, 6c) du rail correspondant au fur et à mesure du déroulement de la couverture (10). Lors de la translation du tambour dans la deuxième direction, le système de verrouillage est configuré pour libérer l'élément en saillie en lui permettant de se désenclencher de l'élément de verrouillage (6a, 6c) au fur et à mesure de l'enroulement de la couverture autour du tambour,
Comme illustré à la Figure 2(a) et 2(b), l'élément en saillie (12) placé le long des deux bords longitudinaux de la couverture est formé par une multitude d'éléments discrets (12d) distribués le long de chaque bord longitudinal. Les éléments discrets (12d) ont une longueur moyenne (L) et sont disposés côte-à-côte le long du bord longitudinal correspondant, séparés les uns des autres par une distance moyenne (d) supérieure ou égale à 0 et de préférence inférieure à L. Une distance d < L permet d'éviter que des éléments discrets (12d) de la couverture enroulée autour de tambour ne viennent s'interposer entre deux éléments discrets d'une couche adjacente d'enroulement autour du tambour. Ce problème peut arriver en particulier si les éléments discrets sont montés de sorte à pouvoir pivoter autour du bord longitudinal de la couverture ou s'ils comprennent des crochets qui peuvent s'accrocher à une couche adjacente d'enroulement. Un élément discret et un espace le séparant d'un élément discret adjacent forment ensemble une unité de saillie de longueur moyenne, Lu = L + d, où les longueur L et distance d moyennes sont mesurées parallèlement aux rails (6) lorsque la couverture est déployée. Les éléments discrets ont une rigidité mécanique en flexion supérieure à celle de la couverture, en particulier, au moins deux fois supérieure à celle de la couverture, de préférence au moins dix fois supérieure à celle de la couverture. Afin de permettre un enroulement optimal autour du tambour, la longueur moyenne Lu des unités de saillie ne dépasse pas 2 n R / N, dans lequel N ≥ 10 est un nombre réel. Une longueur Lu = 2 π R / N correspond à N unités de saillie entourant le tambour de rayon R, au premier tour d'enroulement de la couverture autour du tambour. L'exemple représenté à la Figure 2(b) a une longueur Lu = 2 π R / N, avec N ≃ 16, puisque 16 unités de saillie entourent et contactent le tambour de rayon R.

Dans un cas spécifique, la distance entre deux éléments discrets (12d) peut être nulle (d = 0) et les éléments discrets peuvent se contacter en pouvant pivoter l'un par rapport à l'autre, à la manière d'une chaine de bicyclette. Cette solution peut être intéressante dans des applications spécifiques, mais elle augmente le poids de la couverture, et la rigidité des bords longitudinaux de manière pas nécessairement désirable. Dans la plupart des cas, il est donc préféré que d > 0.

Un avantage d'utiliser des éléments discrets (12d) plutôt qu'un bourrelet continu pour verrouiller les bords longitudinaux de la couverture dans les rails correspondants est qu'en cas de rupture ou usure d'une partie de l'élément en saillie, celle-ci peut être remplacée facilement et la couverture peut à nouveau être utilisée, alors qu'il n'aurait pas été facile de réparer un bourrelet continu présentant une section abîmée.

Plusieurs variantes d'éléments discrets (12d) (voir Figure 3(a) à 3(g)) et d'éléments de verrouillage (6a, 6c) peuvent être implémentés dans la présente invention. Les éléments discrets comprennent une portion alignée fixée au bord longitudinal correspondant de la couverture et une portion de verrouillage configurée pour interagir avec l'élément de verrouillage (6a, 6c) des rails. La portion alignée des éléments discrets (12d) peut être fixée par collage, soudage, couture, vissage, rivetage, clipsage, etc. Un moyen de fixation réversible tel que vissage ou clipsage est préféré, afin de faciliter le changement d'un élément discret (12d) abîmé. Cependant, même des moyens de fixation irréversibles, tels que collage, soudage, rivetage, peuvent permettre le changement d'un élément discret en découpant une portion du bord longitudinal entourant l'élément discret et remplaçant la portion retirée par une nouvelle portion de couverture ou par une couronne supportée par les éléments discrets adjacents à l'élément discret retiré. Les éléments discrets peuvent être fixés aux bords longitudinaux de la couverture de manière rigide ou, alternativement, pouvant pivoter. Par exemple, les bords longitudinaux peuvent comprendre un bourrelet autour duquel chaque élément discret peut s'accrocher de manière à pouvoir pivoter, tel qu'illustré par exemple dans les Figures 3(a), 3(b), 3(d) to 3(g), 4(c), 5(c), 7(c).

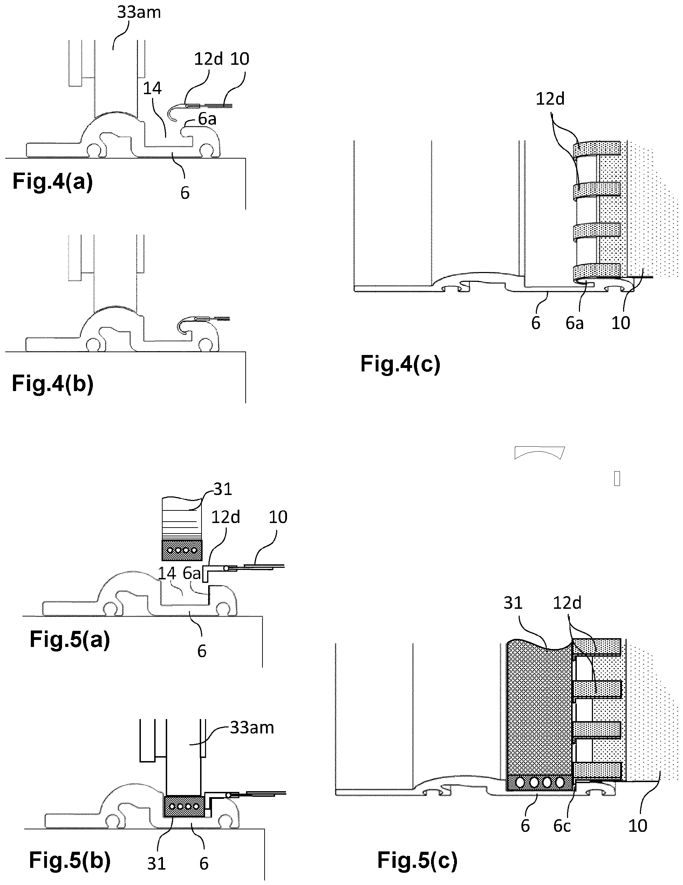

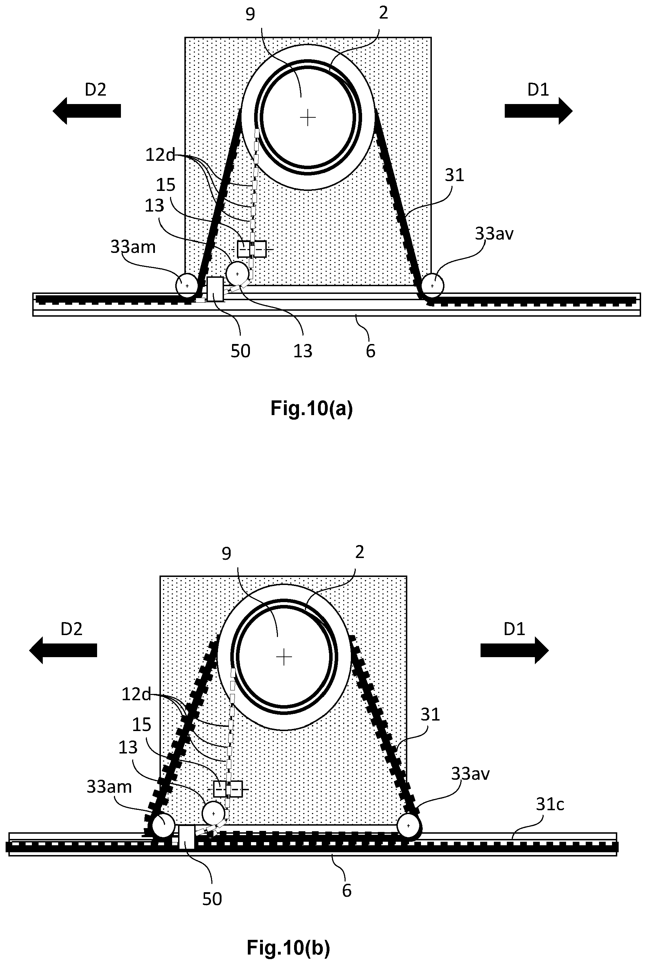

Les éléments discrets de l'élément en saillie des bords longitudinaux sont guidés vers l'ouverture (14) des rails correspondants par des moyens connus. Par exemple, comme illustré dans les Figures 4(a) à 8(a), les éléments discrets doivent être guidés au-dessus de l'ouverture en exerçant une traction sur la couverture dans la direction transversale. Une telle tension transversale est rendue possible, par exemple par des moyens d'application d'une tension transversale à la couverture. Tel que représenté dans les Figures 10(a) et 10(b), de tels moyens comprennent de préférence deux paliers tenseurs (15) séparés l'un de l'autre d'une distance supérieure à l'épaisseur de la couverture et inférieure à l'épaisseur de l'élément en saillie (12, 12d) afin d'appliquer une tension transversale à la couverture.

Le guidage des éléments discrets dans l'ouverture est rendu possible par la poulie de renvoi (13) sensiblement cylindrique montée à rotation selon un axe parallèle à la direction transverse de la couverture de chaque côté du tambour. La Figure 9(a) illustre un exemple de poulie de renvoi (13) formée par une poulie montée sur un axe parallèle à l'axe du tambour. La couverture (10) enveloppe partiellement la poulie de renvoi qui pousse l'élément en saillie en l'éloignant de la surface à couvrir, afin de la maintenir en aplomb de l'ouverture (14) des rails correspondants. La Figure 9(b) illustre un autre exemple de poulie de renvoi, comprenant une extrémité distale (13d), éloignée de la surface à couvrir, et une extrémité proximale (13p), adjacente à ladite surface ; cette dernière étant similaire à la poulie de la Figure 9(a). La couverture enveloppe partiellement l'extrémité proximale de la poulie de renvoi (13) afin de changer d'orientation, de sorte que l'élément en saillie (12) et, en particulier, les éléments discrets (12d) dépassent outre l'extrémité proximale (13p) de la poulie de renvoi. L'extrémité distale (13d) a un diamètre inférieur à l'extrémité proximale, configuré de préférence pour être en contact avec les éléments discrets (12p). L'extrémité distale (13d) permet ainsi d'aligner les éléments discrets avant leur introduction dans l'ouverture (14) des rails correspondants. Ceci est particulièrement avantageux lorsque les éléments discrets sont fixés aux bords longitudinaux de sorte à pouvoir pivoter. Si le système comprend deux paliers tenseurs (15), ceux-ci sont placés entre la poulie de renvoi (13) et le tambour, afin de positionner l'élément en saillie de la couverture outre la poulie de renvoi ou, le cas échéant outre son extrémité proximale, lorsqu'il atteint la poulie de renvoi (13).

Dans certains cas, il peut être avantageux de prévoir un patin d'enclenchement (50) (voir Figure 10(a)) qui serait inséré à glissement dans chaque rail, en amont des poulies de renvois (13) dans la première direction. Le patin d'enclenchement (50) est configuré pour mettre l'élément en saillie en contact avec l'élément de verrouillage (6a, 6c) du rail (6) correspondant et ainsi de verrouiller l'élément en saillie dans l'ouverture du rail. Des exemples de patin d'enclenchement d'un bourrelet sous une aile (6a) d'un rail sont décrits par exemple dans WO2017130053, dont le concept peut être adapté facilement à des éléments discrets selon la présente invention, selon leur géométrie. Un patin d'enclenchement (50) permet également de nettoyer ou repousser tout débris qui se serait introduit dans l'ouverture du rail, en aval d'un point d'introduction des éléments discrets dans l'ouverture du rail correspondant.

Une fois introduits dans l'ouverture (14) du rail correspondant les éléments discrets doivent être verrouillés afin d'assurer une stabilité de la couverture couvrant la surface. Les bords longitudinaux sont verrouillés dans les rails correspondant par interaction des éléments discrets avec l'élément de verrouillage (6a, 6c) des rails. Dans certaines variantes, le verrouillage s'effectue simplement par relâchement de la traction transversale appliquée à la couverture par les poulies de renvoi (13) et optionnellement par les paliers tenseurs, permettant le verrouillage de la portion de verrouillage des éléments discrets dans l'élément de verrouillage (6a, 6c) des rails. Dans d'autres variantes, le verrouillage s'effectue grâce à l'introduction d'un élément de verrouillage extérieur aux rails, tels que des courroies flexibles (31), qui peuvent servir à la fois pour activer la translation du tambour et pour verrouiller les éléments discrets dans l'ouverture des rails.

Dans une variante, illustrée à la Figure 4, l'élément de verrouillage comprend une aile (6a) fermant partiellement le côté de l'ouverture (14) de chaque rail (6) adjacent à la surface à couvrir. Chaque élément discret (12d) forme un crochet, tel qu'illustré aux Figures 3(c) à 3(e), ayant un profil en « L » ou, de préférence en « j ». Le profile comprend une portion alignée en continu avec la surface de la couverture et fixée au bord longitudinal correspondant de la couverture telle que décrite supra, et une portion transverse formant le crochet, s'étendant transversalement par rapport à la portion alignée.

Le crochet est configuré pour s'accrocher à l'aile (6a) du rail correspondant une fois que la tension transversale appliquée sur la couverture par les poulies de renvoi (13) est relâchée (voir Figures 4(b) et 4(c)). Dans le cas où la portion transverse des éléments discrets (12d) formant le crochet comprend un renvoi, tel qu'illustré dans les Figures 3(c) et 3(e), le verrouillage est assuré. Dans le cas d'un profil en « L », tel qu'illustré à la Figure 3(d), l'angle entre la portion alignée et la portion transverse peut être légèrement inférieure à 90° afin d'assurer un ancrage avec le rail. Dans le cas d'un profil en « L » avec un angle de 90°, le verrouillage peut être renforcé par un élément de verrouillage extérieur à la façon d'un harpon.

Dans la variante illustrée aux Figures 5(a) à 5(c), les éléments discrets ont un profil en « L » formant un angle de 90° entre les portions alignées et transverses. L'élément de verrouillage des rails est formé simplement par une paroi normale à la surface à couvrir. Afin de renforcer le niveau de verrouillage d'une telle configuration, le système de verrouillage comprend de plus deux courroies flexibles (31). Comme illustré aux Figures 5(b) et 5(c), chaque courroie est apte lors de la translation du tambour dans la première direction, à se déposer au fur et à mesure du déroulement de la couverture (10) dans l'ouverture (14) du rail correspondant une fois que les éléments discrets (12d) aient été engagés dans l'ouverture et ainsi de les y coincer. Lors de la translation du tambour dans la deuxième direction, chaque courroie est apte à se retirer de ladite ouverture (14), libérant ainsi les éléments discrets et leur permettant de se désenclencher du rail correspondant au fur et à mesure de l'enroulement de la couverture. Cette variante est particulièrement adaptée pour être utilisée avec un mécanisme de translation tel qu'illustré aux Figures 1(a) et 10(a) et décrit plus bas, comprenant deux courroies flexibles (31) fixées uniquement à chacune de leurs extrémités (35) aux quatre coins de la surface à couvrir et s'étendent le long des bords longitudinaux de la surface à couvrir et coiffant une roue d'entraînement. En effet, les courroies flexibles (31) peuvent alors cumuler plusieurs fonctions : (a) permettre la translation du tambour, tels que décrit plus bas, (b) verrouiller les éléments discrets en « L », et (c) fermer l'ouverture (14) sur toute la longueur de la surface à couvrir excluant la portion (31b) comprise entre les roulettes amont et avale (33am, 33av).

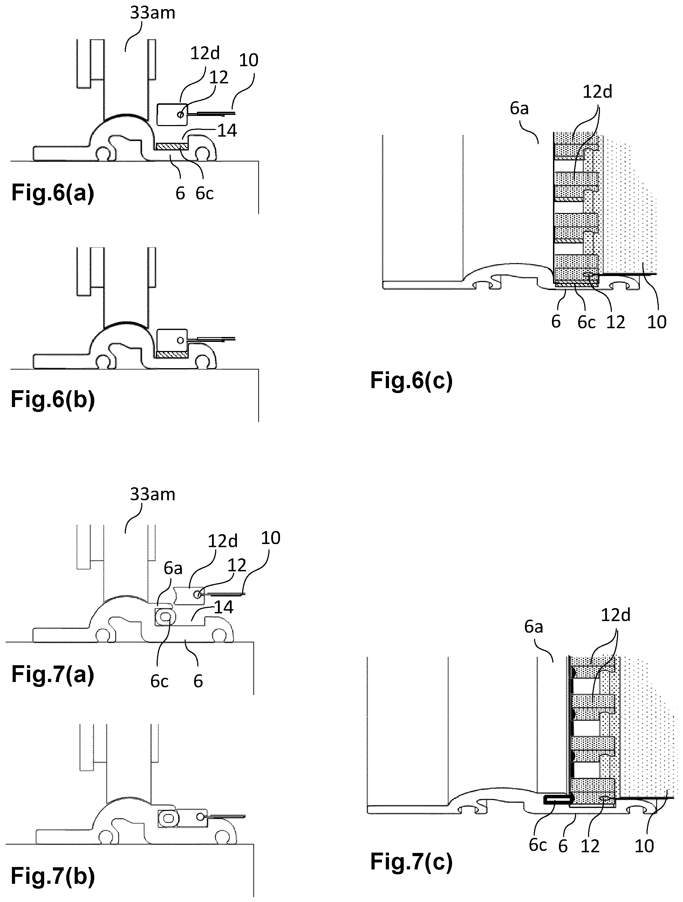

Dans la variante illustrée aux Figures 6(a) à 6(c), l'élément de verrouillage comprend un ou plusieurs aimants (6c) positionnés dans l'ouverture de chaque rail (6) qui est fermée par une paroi transversale, de préférence normale à la surface à couvrir, du côté des rails adjacent à la surface à couvrir et les éléments discrets. Chaque élément discret (12d), comprend au moins une portion ferromagnétique configurée pour faire face à et être attirée par l'un ou plusieurs aimants. Tel qu'illustré à la Figure 3(b), la géométrie des éléments discrets n'est pas particulièrement limitée, sauf par le fait qu'elle doit présenter une surface suffisamment grande configurée pour interagir avec les aimants et doit bien entendu être en saillie afin de reposer sur une paroi de l'ouverture du rail. Bien entendu, les aimants peuvent également être disposés sur une face des éléments discrets attitrés par le fond des rails métalliques et ferromagnétiques. Dans cette variante il est plus difficile de contrôler avec exactitude la position de contact entre l'aimant de chaque élément discret avec une zone précise du rail, si celui-ci est entièrement constitué d'un matériau ferromagnétique. L'attraction entre les aimants et le matériau ferromagnétique permet d'éviter que les éléments discrets, pressés contre la paroi transversale par la tension transversale des rails appliquée sur la couverture ne sortent de l'ouverture du rail.

Dans la variante illustrée aux Figures 7(a) à 7(c), l'élément de verrouillage et les éléments discrets forment un système d'assemblage par encliquetage comprenant une protrusion résiliente s'encliquetant dans une dépression par déformation élastique lorsqu'un élément discret (12d) est introduit dans l'ouverture (14) desdits rails (6). Par exemple, comme illustré à la Figure 7(b)&7(c) l'élément de verrouillage des rails (6) peut comprendre une aile (6a) fermant partiellement le côté de l'ouverture (14) de chaque rail (6) opposé à la surface à couvrir et un élément résilient -par exemple, sous forme d'un boudin coincé sous l'aile (6a)- et dépassant outre l'aile formant une protrusion résiliente s'étendant dans l'ouverture (14) dans une direction vers la surface (3) à couvrir. Chaque élément discret (12d) comprend une cavité concave telle qu'illustré à la Figure 3(f), s'étendant parallèle au bord longitudinal de la couverture sur une surface de l'élément discret lorsqu'il est introduit dans l'ouverture (14) du rail (6) correspondant. En forçant l'entrée d'un élément discret (12d) dans l'ouverture (14) l'élément discret contacte une surface du boudin formant la protrusion et le déforme jusqu'à ce que l'élément discret atteigne sa position et que le boudin puisse retrouver sa géométrie initiale en se logeant dans la cavité de l'élément discret.

Il est clair qu'un système de verrouillage par encliquetage peut aussi comprendre une protrusion résiliente sur une face de chaque élément discret opposé à la couverture, telle qu'illustrée à la Figure 3(g), venant s'encliqueter dans une cavité sous forme d'une rainure le long d'une surface de l'ouverture et formant l'élément de verrouillage du rail.

Le désencliquetage des éléments discrets hors de l'ouverture du rail correspondant se fait simplement en tirant sur la couverture lors du déplacement du tambour dans la deuxième direction, déformant élastiquement la protrusion résiliente et forçant ainsi la sortie des éléments discrets (12d) hors de l'ouverture.

Dans la variante illustrée aux Figures 8(a) à 8(c), l'élément de verrouillage comprend une aile (6a) fermant partiellement le côté de l'ouverture (14) de chaque rail (6) opposé à la surface à couvrir. Chaque élément discret (12d) comprend une protrusion (12p) s'étendant dans la direction opposée à la couverture (10) et en alignement avec la couverture (10), tel qu'illustré à la Figure 3(a). La protrusion est configurée pour se glisser sous l'aile (6a) lorsqu'un élément discret (12d) est introduit dans l'ouverture (14) desdits rails (6). Comme illustré à la Figure 8(a), les éléments discrets (12d) sont introduits dans l'ouverture (14) formant un angle avec la couverture et avec l'aile (6a) afin d'introduire la protrusion sous l'aile et ensuite, comme illustré aux Figures 8(b) et 8(c), les éléments discrets peuvent s'insérer dans l'ouverture, bien calés s'appuyant sur une paroi de l'ouverture, avec la protrusion placée sous l'aile (6a). Pour retirer les éléments discrets, il faut les déplacer légèrement en les éloignant de la surface à couvrir en appliquant une tension transversale sur la couverture et les soulever par le côté adjacent à la surface (3) et opposé à la protrusion afin de former un angle entre l'aile (6a) et la protrusion et de pouvoir la glisser hors de dessous de l'aile pour libérer les éléments discrets.

Comme illustré aux Figures 1(a) & 1(b) et 10(a) & 10(b), le mécanisme de déplacement comprend de préférence un chariot (21) monté sur les rails (6) et surplombant transversalement la surface (3) à couvrir et supportant le tambour (2) comprenant à chacune de ses extrémités :
- une roue d'entraînement (9) dont l'axe de rotation est parallèle à celui du tambour (2);
- au moins une roulette avale (33av) et une roulette amont (33am) reposant sur les rails (6) ou sur une surface adjacente aux rails, et permettant la translation longitudinale du chariot (21). La roulette avale (33av) est montées en aval de la roue d'entraînement et la roulette amont (33am) en amont de la roue d'entraînement (9) dans la première direction de déplacement, et constituant avec celle-ci un triangle de préférence sensiblement isocèle dont la roue d'entraînement (9) forme un sommet supérieur.

Les termes « amont » et « aval » sont utilisés par rapport au déplacement du tambour dans la première direction permettant le déploiement de la couverture sur la surface. La portion de surface située en amont du tambour est déjà recouverte par la couverture, alors que la portion de surface située en aval du tambour ne l'est pas encore. Comme on le voit sur les Figures 4 à 8, si les roulettes amont et avale (33am, 33av) reposent sur les rails (6), ce n'est pas nécessairement, et de préférence pas dans l'ouverture (14), mais adjacent à l'ouverture, afin d'éviter que la roulette amont (33av) ne roule sur les éléments discrets engagés dans l'ouverture.

Le déplacement du tambour le long d'une surface à couvrir ou découvrir se produit généralement à une vitesse constante. Les roues d'entraînement (9) doivent donc tourner à une vitesse de rotation sensiblement constante. Cependant, surtout pour des surfaces de dimensions longitudinales importantes, les diamètres extérieurs du tambour lorsque la couverture est déployée ou retirée peuvent varier considérablement. Comme la vitesse de déploiement/retrait de la couverture dépend de la vitesse de rotation des roues d'entraînement (qui demeure généralement constante) et comme le diamètre extérieur du tambour varie avec la portion de couverture qui y est enroulée, il s'ensuit que le tambour et les roues d'entraînement (9) ne peuvent tourner à la même vitesse. Pour des couvertures de petites dimensions, il est possible de compenser les différences de vitesse par une traction sur la couverture. Pour des couvertures de dimensions longitudinales plus importantes, comme pour une piscine ou une remorque d'un semi-remorque, il est nécessaire de prévoir des moyens de modification de la vitesse relative de rotation entre le tambour d'enroulement/déroulement de la couverture et l'axe de rotation des roues d'entraînement (9). Ces moyens peuvent inclure un ressort spiralé placé à l'intérieur du tambour (2) permettant de compenser la différence entre la vitesse de rotation des roues d'entraînement, qui doit rester sensiblement constante, et la vitesse de rotation du tambour, qui varie avec le diamètre extérieur du tambour au fur et à mesure que la couverture est enroulée/déroulée. Comme décrit plus haut, lors du déploiement de la couverture, le tambour tourne spontanément dû à la tension créée par la couverture qui est fixée à l'extrémité transversale amont de la surface à couvrir. Si le ressort spiralé se tend pendant le déploiement de la couverture (10) sur la surface, il n'est pas nécessaire de motoriser la rotation du tambour non plus lors du ramassage et ré-enroulement de la couverture autour du tambour, dont la rotation est conduite par la détente du ressort spiralé. Ce système est très avantageux car il ne nécessite pas de deuxième moteur ou d'un système d'engrenages ou de contrôle électronique pour tourner le tambour à la vitesse adéquate.

Dans une variante préférée de mécanisme de translation illustrée aux Figures 1(a) et 10(a), le mécanisme de translation comprend deux courroies flexibles (31) fixées uniquement à chacune de leurs extrémités (35) aux quatre coins de la surface à couvrir, chacune des deux courroies (31):
(a) étant disposée dans l'ouverture (14) des rails (6) dans les sections latérales (31a) comprises entre un point de fixation (35) et la roulette (33) la plus proche dudit point de fixation, et
(b) coiffant sans glissement la roue d'entraînement (9) dans la section centrale (31b) comprise entre les deux roulettes (33).

Les portions de courroies introduites dans la section latérale (31a) située en amont de la roulette amont (33am), i.e., entre la roulette amont et l'extrémité transversale amont de la surface sont de préférence introduites dans l'ouverture dans un espace compris entre les éléments discrets (12d) et une paroi transversale opposée à la surface à couvrir, permettant de verrouiller encore plus les éléments discrets dans l'ouverture du rail, comme illustré dans la variante des Figures 5(a) à 5(c). Une telle variante est très intéressante car les courroies flexibles remplissent de multiples fonctions. Elles permettent tout d'abord de déplacer le chariot le long des rails. Comme le segment angulaire de la roue d'entraînement (9) coiffé par une courroie flexible (31) telle que décrite ci-dessus est bien supérieur à celui couvert par une crémaillère droite, par exemple posée au fond du rail, les risques de glissement d'une roue d'entraînement sont considérablement réduits. Un tel glissement d'une roue d'entraînement provoquerait la mise en travers du chariot et le blocage du système. Un deuxième avantage d'un tel système est qu'entre le chariot et les coins (35) de la surface à couvrir, l'ouverture (14) est obturée par la courroie (31) qui est insérée dans le rail dans ses deux sections (31a) en amont et en aval du tambour, et la courroie est en contact avec les éléments discrets dans les sections (31a) situées en amont des roulettes amonts (33am). Ceci permet de diminuer l'entrée de corps étrangers dans les rails, tels que poussières, graviers, brindilles, etc., et aussi d'éviter qu'une personne s'y coince un orteil, par exemple dans le cas d'une piscine. Enfin, et ceci concerne plus particulièrement la présente invention, les courroies permettent de verrouiller les éléments discrets dans l'ouverture des rails correspondants au fur et à mesure que les éléments discrets (12d) sont introduits dans l'ouverture du rail, comme discuté en rapport aux Figures 5(a) à 5(c).

Dans une variante alternative de mécanisme de translation illustrée aux Figures 1(b), 1(c) et 10(b), le mécanisme de translation comprend les éléments suivants. Deux courroies flexibles (31d) enrobent sans glissement les roulettes amont et avale (33am, 33av) ainsi que la roue d'entraînement (9). Chaque courroie flexible comprend une face intérieure et une face extérieure séparée de la face intérieure par une épaisseur des courroies, la face extérieure de chaque courroie flexible est crantée et la face intérieure de chaque courroie flexible est soit crantée, soit texturée. La surface intérieure de chaque courroie flexible coiffe sans glissement les roulettes amont et avale (33am, 33av) ainsi que la roue d'entraînement (9).

Deux crémaillères (31c) sont disposées le long des bords longitudinaux et parallèles à, dans certains cas dans l'ouverture (14) de chaque rail (6). La surface extérieure crénelée d'une portion de chacune des courroies flexibles comprise entre la roulette avale (33av) et la roulette amont (33am) correspondantes s'engrène dans la crémaillère correspondante. La rotation des roues d'entraînement provoque la rotation des courroies flexibles déplaçant ainsi le tambour en s'engrenant dans les crémaillères qui sont fixes. On pourrait aussi contacter les roues d'entraînement directement avec les crémaillères, mais la surface de contact entre l'engrenage des roues d'entraînement avec les crémaillères est beaucoup plus petite qu'avec la solution des courroies flexibles décrite ci-dessus, évitant ainsi des glissements qui mettraient le tambour de travers par rapport aux rails et bloqueraient le fonctionnement du dispositif.

Un dispositif de couverture selon la présente invention est particulièrement adapté au recouvrement de surfaces telles que :
(a) un bassin rempli ou non d'un liquide tel qu'une piscine, un bassin de rétention, de traitement ou de désalinisation des eaux ;
(b) un terrain de sports, tel un terrain de tennis ou de cricket ;
(c) une caisse de véhicule, telle une remorque,
(d) une surface vitrée telle une serre, un jardin d'hiver ou une fenêtre de véhicule.

Avec le dispositif selon la présente invention, une surface (3) peut être couverte par une couverture (10) très simplement de la manière suivante :
(a) le tambour (2) se trouve à l'extrémité amont de la surface à couvrir, avec un second bord transversal de la couverture étant fixé à l'extrémité transversale amont de la surface et le reste de la couverture étant enroulé autour du tambour,
(b) déplacer le tambour dans la première direction au-dessus de la surface à couvrir le long des rails (6), et ainsi dérouler du tambour la couverture qui se déploie sur la portion de surface en amont du tambour et, en même temps, guider et maintenir l'élément en saillie (12, 12d) de chaque bord longitudinal de la couverture vis-à-vis de l'ouverture (14) du rail (6) correspondant au fur et à mesure que le tambour avance,
(c) mettre en contact l'élément en saillie avec l'élément de verrouillage dans l'ouverture (14) du rail et verrouiller l'élément en saillie au rail.

Dans un dispositif de couverture tel que décrit ci-dessus, les bords longitudinaux de la couverture sont fermement verrouillés offrant ainsi une sécurité accrue, surtout dans le cas de bassins, remplis ou pas d'eau ou autre liquide. Cela permet également d'atteindre un degré d'étanchéité important entre le volume défini sous la couverture et le volume défini au-dessus de la couverture. Cela permet, de nouveau dans le cas de bassins, de limiter fortement l'évaporation d'eau et des produits chimiques, tels que le chlore. Cela permet également de pressuriser le volume défini sous la couverture. Afin de réaliser ce verrouillage des bords longitudinaux de la couverture, les éléments discrets sont soumis à de nombreuses sollicitations mécaniques en torsion, tension et même compression lorsqu'ils passent à travers les différents paliers et poulies, ce qui peut provoquer leur usure et même leur rupture. Dans ce cas, contrairement à un bourrelet continu usé ou abîmé, les éléments discrets endommagés peuvent être changés facilement.

## Revendications

1. Dispositif (1) de couverture d'une surface (3) comprenant :
(a) Une couverture (10) sensiblement rectangulaire ayant deux bords longitudinaux opposés l'un à l'autre et deux bords transversaux opposés l'un à l'autre, chaque bord longitudinal étant muni d'un élément (12, 12d) en saillie, s'étendant le long dudit bord,
(b) un tambour (2) de rayon (R) monté à rotation apte à enrouler et dérouler la couverture (10), ledit tambour (2) étant monté sur un mécanisme de translation longitudinale le long de rails (6) placés de part et d'autre de ladite surface (3) et constitués chacun d'un profilé ayant une ouverture (14) sur une de ses faces et orientée à l'opposé de la surface à couvrir, et étant muni d'un élément de verrouillage (6a, 6c), ledit mécanisme de translation permettant la translation longitudinale du tambour dans une première direction entraînant le déroulement de la couverture et son déploiement au-dessus de la surface à couvrir (3) et dans une seconde direction entraînant l'enroulement de la couverture et son retrait de ladite surface (3),
(c) une poulie de renvoi (13) pourvue de chaque côté de la surface à couvrir permettant de guider et positionner ledit élément en saillie (12, 12d) de chaque bord longitudinal de la couverture vis-à-vis l'ouverture (14) du rail (6) correspondant lors de la translation dans la première direction du tambour entraînant le déroulement de la couverture,
(d) un système de verrouillage continu de l'élément en saillie (12, 12d) des bords longitudinaux de la couverture (10) dans l'ouverture (14) desdits rails (6), permettant, une fois que l'élément en saillie ait été engagé dans l'ouverture (14), de le verrouiller avec l'élément de verrouillage (6a, 6c) du rail correspondant au fur et à mesure du déroulement de la couverture (10) et, lors de la translation du tambour dans la seconde direction, de libérer l'élément en saillie en lui permettant de se désenclencher de l'élément de verrouillage (6a, 6c) au fur et à mesure de l'enroulement de la couverture,
**caractérisé en ce que** l'élément en saillie de chaque bord longitudinal de la couverture comprend une multitude d'éléments discrets (12d) distribués le long de chaque bord longitudinal, et **en ce que**,
• les éléments discrets (12d) ont une longueur moyenne (L) et sont disposés côte-à-côte le long du bord longitudinal correspondant, séparés les uns des autres par une distance moyenne (d) supérieure ou égale à 0 et est de préférence inférieur à L, formant des unités de saillie de longueur moyenne (Lu = L + d), où les longueur (L) et distance (d) moyennes sont mesurées parallèlement aux rails (6) lorsque la couverture est déployée,
• chaque élément discret a une rigidité mécanique en flexion au moins deux fois supérieure à celle de la couverture, et
• la longueur moyenne (Lu) des unités de saillie ne dépasse pas 2 π R / N, dans lequel N ≥ 10 est un nombre réel.

2. Dispositif selon la revendication 1, dans lequel,
• l'élément de verrouillage comprend une aile (6a) fermant partiellement le côté de l'ouverture (14) de chaque rail (6) adjacent à la surface à couvrir et
• chaque élément discret (12d) forme un crochet ayant un profil en « L » ou en « j », ayant
∘ une portion alignée en continu avec la surface de la couverture et fixée au bord longitudinal correspondant de la couverture, et
∘ une portion transverse formant le crochet, s'étendant transversalement par rapport à la portion alignée
le crochet étant configuré pour s'accrocher à l'aile (6a)

3. Dispositif selon la revendication 1, dans lequel,
• l'élément de verrouillage comprend un ou plusieurs aimants (6c) positionnés dans l'ouverture de chaque rail (6) et
• chaque élément discret (12d) comprend au moins une portion ferromagnétique configurée pour faire face à et être attirée par l'un ou plusieurs aux aimants lorsque un élément discret est introduit dans l'ouverture (14) desdits rails (6).

4. Dispositif selon la revendication 1, dans lequel,
• l'élément de verrouillage comprend une aile (6a) fermant partiellement le côté de l'ouverture (14) de chaque rail (6) opposé à la surface à couvrir et
• chaque élément discret (12d) comprend une protrusion (12p) s'étendant dans la direction opposée à la couverture (10) et en alignement avec la couverture (10), la protrusion étant configurée pour se glisser sous l'aile (6a) lorsqu'un élément discret (12d) est introduit dans l'ouverture (14) desdits rails (6).

5. Dispositif selon la revendication 1, dans lequel l'élément de verrouillage et les éléments discrets forment un système d'assemblage par encliquetage comprenant une protrusion s'encliquetant dans une dépression lorsqu'un élément discret (12d) est introduit dans l'ouverture (14) desdits rails (6).

6. Dispositif selon la revendication 2, dans lequel le système de verrouillage comprend de plus deux courroies flexibles (31), chacune étant apte,
• lors de la translation du tambour dans la première direction, à se déposer au fur et à mesure du déroulement de la couverture (10) dans l'ouverture (14) du rail correspondant une fois que les éléments discrets (12d) aient été engagés dans l'ouverture de ce dernier et ainsi de les y coincer et,
• lors de la translation du tambour dans la deuxième direction, à se retirer de ladite ouverture (14), libérant ainsi les éléments discrets et leur permettant de se désenclencher du rail correspondant au fur et à mesure de l'enroulement de la couverture.

7. Dispositif selon l'une quelconque des revendications précédentes, dans lequel le mécanisme de translation comprend un chariot (21) monté sur les rails (6) et surplombant transversalement la surface (3) à couvrir et supportant le tambour (2) comprenant à chacune de ses extrémités :
• une roue d'entraînement (9) dont l'axe de rotation est parallèle à celui dudit tambour (2);
• au moins une roulette avale (33av) et une roulette amont (33am) reposant sur les rails (6) ou sur une surface adjacente aux rails, et permettant la translation longitudinale du chariot (21), et étant montées la première en aval et la seconde en amont de la roue d'entraînement (9) dans la première direction de déplacement, et constituant avec celle-ci un triangle dont la roue d'entraînement (9) forme un sommet supérieur.

8. Dispositif selon la revendication 7, dans lequel la roulette avale (33av) et la roulette amont (33am) reposent sur le rail (6) correspondant et dans lequel le mécanisme de translation comprend deux courroies flexibles (31) fixées uniquement à chacune de leurs extrémités (35) aux quatre coins de la surface à couvrir et s'étendent le long des bords longitudinaux de la surface à couvrir de la manière suivante :
• elles sont disposées dans l'ouverture (14) des rails (6) dans les sections latérales (31a) comprises entre un point de fixation (35) et la roulette (33av, 33am) la plus proche dudit point de fixation, et verrouillant ainsi les éléments discrets (12d) introduits dans l'ouverture (14) dans la section latérale (31a) comprenant la roulette avale (33av),
• elles coiffent sans glissement la roue d'entraînement (9) dans la section centrale (31b) comprise entre les deux roulettes (33av, 33am).

9. Dispositif selon la revendication 7, dans lequel le mécanisme de translation comprend :
• deux courroies flexibles (31d) comprenant une face intérieure et une face extérieure séparée de la face intérieure par une épaisseur des courroies, les faces intérieure et extérieure de chaque courroie flexible étant chacune crantée, la surface intérieure de chaque courroie flexible coiffant sans glissement les roulettes amont et avale (33am, 33av) ainsi que la roue d'entraînement (9) et
• deux crémaillères (31c) disposées le long des bords longitudinaux et parallèles à, de préférence dans l'ouverture (14) de chaque rail (6), la surface extérieure d'une portion de chacune des courroies flexibles comprise entre la roulette avale (33av) et la roulette amont (33am) correspondantes s'engrenant dans la crémaillère correspondante.

10. Dispositif selon une quelconque des revendications précédentes, comprenant de plus un patin d'enclenchement (50) de l'élément en saillie, inséré à glissement dans chaque rail, en amont des poulies de renvois (13) dans la première direction de translation, ledit patin d'enclenchement étant configuré pour mettre l'élément en saillie en contact avec l'élément de verrouillage (6a, 6c) du rail (6) correspondant et ainsi de verrouiller l'élément en saillie dans l'ouverture du rail.

11. Utilisation d'un dispositif selon l'une quelconque des revendications précédentes pour couvrir une surface (3) sélectionnée parmi :
• un bassin rempli ou non d'un liquide tel qu'une piscine, un bassin de rétention, de traitement ou de désalinisation des eaux ;
• un terrain de sports, tel un terrain de tennis ou de cricket ;
• une caisse de véhicule,
• une surface vitrée telle une serre, un jardin d'hiver ou une fenêtre de véhicule.

12. Procédé pour couvrir une surface (3) par une couverture (10) utilisant un dispositif de couverture selon une quelconque des revendications précédentes dans lequel :
(a) le tambour (2) se trouve à une extrémité amont de la surface à couvrir, avec un bord transversal de la couverture étant fixé à cette extrémité transversale amont de la surface et le reste de la couverture étant enroulé autour du tambour,
(b) déplacer le tambour dans une première direction au-dessus de la surface à couvrir le long des rails (6), et ainsi dérouler du tambour la couverture qui se déploie sur la portion de surface en amont du tambour et, en même temps, guider et maintenir l'élément en saillie (12, 12d) de chaque bord longitudinal de la couverture vis-à-vis de l'ouverture (14) du rail (6) correspondant au fur et à mesure que le tambour avance,
(c) mettre en contact l'élément en saillie avec l'élément de verrouillage dans l'ouverture (14) du rail et verrouiller l'élément en saillie au rail.

## Patentansprüche

1. Vorrichtung (1) zur Abdeckung einer Oberfläche (3), umfassend:
(a) eine im Wesentlichen rechteckige Abdeckung (10), die zwei einander gegenüberliegende Längsränder und zwei einander gegenüberliegende Querränder aufweist, wobei jeder Längsrand mit einem vorspringenden Element (12, 12d) versehen ist, das sich entlang des Randes erstreckt,
(b) eine Trommel (2) mit einem Radius (R), die drehbar gelagert und geeignet ist, die Abdeckung (10) aufzuwickeln und abzuwickeln, wobei die Trommel (2) auf einem Mechanismus zur Längstranslation entlang von Schienen (6) angebracht ist, die beiderseits der Oberfläche (3) angeordnet sind und jeweils von einem Profil gebildet werden, das eine Öffnung (14) auf einer seiner Seiten aufweist, die zu der abzudeckenden Oberfläche entgegengesetzt ausgerichtet ist, und das mit einem Verriegelungselement (6a, 6c) ausgestattet ist, wobei der Translationsmechanismus die Längstranslation der Trommel in einer ersten Richtung ermöglicht, die das Abwickeln der Abdeckung und ihre Ausbreitung über der abzudeckenden Oberfläche (3) zur Folge hat, und in einer zweiten Richtung, die das Aufwickeln der Abdeckung und ihr Zurückziehen von der Oberfläche (3) zur Folge hat,
(c) eine auf jeder Seite der abzudeckenden Oberfläche vorgesehene Umlenkrolle (13), die es ermöglicht, bei der Translation der Trommel in der ersten Richtung, die das Abwickeln der Abdeckung zur Folge hat, das vorspringende Element (12, 12d) jedes Längsrandes der Abdeckung zu führen und gegenüber der Öffnung (14) der entsprechenden Schiene (6) zu positionieren,
(d) ein System zur durchgehenden Verriegelung des vorspringenden Elements (12, 12d) der Längsränder der Abdeckung (10) in der Öffnung (14) der Schienen (6), das es ermöglicht, nachdem das vorspringende Element in die Öffnung (14) eingeführt worden ist, es während der Abwicklung der Abdeckung (10) nach und nach mit dem Verriegelungselement (6a, 6c) der entsprechenden Schiene zu verriegeln, und bei der Translation der Trommel in der zweiten Richtung das vorspringende Element während der Aufwicklung der Abdeckung nach und nach freizugeben, indem ihm ermöglicht wird, außer Eingriff mit dem Verriegelungselement (6a, 6c) zu gelangen,
**dadurch gekennzeichnet, dass** das vorspringende Element jedes Längsrandes der Abdeckung mehrere diskrete Elemente (12d) umfasst, die entlang jedes Längsrandes verteilt sind, und dadurch, dass
• die diskreten Elemente (12d) eine mittlere Länge (L) aufweisen und entlang des entsprechenden Längsrandes nebeneinander angeordnet sind und durch einen mittleren Abstand (d) voneinander getrennt sind, der größer oder gleich 0 und vorzugsweise kleiner als L ist, wobei sie Vorsprungseinheiten mit einer mittleren Länge (Lu = L + d) bilden, wobei die mittleren Längen (L) und Abstände (d) parallel zu den Schienen (6) gemessen werden, wenn die Abdeckung ausgebreitet ist,
• jedes diskrete Element eine mechanische Biegesteifigkeit aufweist, die mindestens zweimal so groß wie diejenige der Abdeckung ist, und
• die mittlere Länge (Lu) der Vorsprungseinheiten 2 π R / N nicht überschreitet, wobei N ≥ 10 eine reelle Zahl ist.

2. Vorrichtung nach Anspruch 1, wobei
• das Verriegelungselement einen Flügel (6a) umfasst, der die Seite der Öffnung (14) jeder Schiene (6), die der abzudeckenden Oberfläche benachbart ist, teilweise verschließt, und
• jedes diskrete Element (12d) einen Haken mit einem L-förmigen oder J-förmigen Profil bildet, mit
o einem Abschnitt, der mit der Oberfläche der Abdeckung fluchtend ausgerichtet und am entsprechenden Längsrand der Abdeckung befestigt ist, und
o einem den Haken bildenden Querabschnitt, der sich in Bezug auf den ausgerichteten Abschnitt quer erstreckt,
wobei der Haken dafür ausgelegt ist, sich an dem Flügel (6a) anzuhaken.

3. Vorrichtung nach Anspruch 1, wobei
• das Verriegelungselement einen oder mehrere Magnete (6c) umfasst, die in der Öffnung jeder Schiene (6) positioniert sind, und
• jedes diskrete Element (12d) mindestens einen ferromagnetischen Abschnitt umfasst, der dafür ausgelegt ist, den ein oder mehreren Magneten zugewandt zu sein und von ihnen angezogen zu werden, wenn ein diskretes Element in die Öffnung (14) der Schienen (6) eingeführt wird.

4. Vorrichtung nach Anspruch 1, wobei
• das Verriegelungselement einen Flügel (6a) umfasst, der die Seite der Öffnung (14) jeder Schiene (6), die von der abzudeckenden Oberfläche abgewandt ist, teilweise verschließt, und
• jedes diskrete Element (12d) einen Vorsprung (12p) umfasst, der sich in der von der Abdeckung (10) abgewandten Richtung erstreckt und mit der Abdeckung (10) fluchtet, wobei der Vorsprung dafür ausgelegt ist, unter den Flügel (6a) zu gleiten, wenn ein diskretes Element (12d) in die Öffnung (14) der Schienen (6) eingeführt wird.

5. Vorrichtung nach Anspruch 1, wobei das Verriegelungselement und die diskreten Elemente ein Rastverbindungssystem bilden, das einen Vorsprung umfasst, der in eine Vertiefung einrastet, wenn ein diskretes Element (12d) in die Öffnung (14) der Schienen (6) eingeführt wird.

6. Vorrichtung nach Anspruch 2, wobei das Verriegelungssystem außerdem zwei flexible Riemen (31) umfasst, wobei jeder in der Lage ist,
• bei der Translation der Trommel in der ersten Richtung, sich während der Abwicklung der Abdeckung (10) nach und nach in der Öffnung (14) der entsprechenden Schiene abzulegen, nachdem die diskreten Elemente (12d) in die Öffnung dieser Letzteren eingeführt worden sind, und sie somit dort festzuklemmen, und
• bei der Translation der Trommel in der zweiten Richtung, sich aus der Öffnung (14) zurückzuziehen, wodurch die diskreten Elemente freigegeben werden und ihnen ermöglicht wird, während der Aufwicklung der Abdeckung nach und nach außer Eingriff mit der Schiene zu gelangen.

7. Vorrichtung nach einem der vorhergehenden Ansprüche, wobei der Translationsmechanismus einen Wagen (21) umfasst, der auf den Schienen (6) angebracht ist und in Querrichtung über die abzudeckende Oberfläche (3) hinausragt und die Trommel (2) trägt und an jedem seiner Enden umfasst:
• ein Antriebsrad (9), dessen Drehachse parallel zu derjenigen der Trommel (2) ist;
• wenigstens ein nachgelagertes Rädchen (33av) und vorgelagertes Rädchen (33am), die auf den Schienen (6) oder auf einer den Schienen benachbarten Fläche ruhen und die Längstranslation des Wagens (21) ermöglichen, und wobei, in der ersten Bewegungsrichtung gesehen, das erste Rädchen nach und das zweite vor dem Antriebsrad (9) angebracht ist, und die mit Letzterem ein Dreieck bilden, von dem das Antriebsrad (9) einen oberen Scheitelpunkt bildet.

8. Vorrichtung nach Anspruch 7, wobei das nachgelagerte Rädchen (33av) und das vorgelagerte Rädchen (33am) auf der entsprechenden Schiene (6) ruhen und wobei der Translationsmechanismus zwei flexible Riemen (31) umfasst, die ausschließlich an jedem ihrer Enden (35) an den vier Ecken der abzudeckenden Oberfläche befestigt sind und sich auf folgende Weise entlang der Längsränder der abzudeckenden Oberfläche erstrecken:
• sie sind in der Öffnung (14) der Schienen (6) in den seitlichen Abschnitten (31a), die zwischen einem Befestigungspunkt (35) und dem am nächsten bei dem Befestigungspunkt befindlichen Rädchen (33av, 33am) liegen, angeordnet und verriegeln somit die in die Öffnung (14) eingeführten diskreten Elemente (12d) in dem seitlichen Abschnitt (31a), der das nachgelagerte Rädchen (33av) umfasst,
• sie decken das Antriebsrad (9) in dem mittleren Abschnitt (31b), der zwischen den zwei Rädchen (33av, 33am) liegt, ohne Gleiten ab.

9. Vorrichtung nach Anspruch 7, wobei der Translationsmechanismus umfasst:
• zwei flexible Riemen (31d), die eine Innenseite und eine Außenseite, die von der Innenseite durch eine Dicke der Riemen getrennt ist, umfassen, wobei die Innen- und die Außenseite jedes flexiblen Riemens jeweils gezahnt sind, wobei die Innenfläche jedes flexiblen Riemens das vorgelagerte und das nachgelagerte Rädchen (33am, 33av) sowie das Antriebsrad (9) ohne Gleiten abdeckt, und
• zwei Zahnstangen (31c), die entlang der Längsränder angeordnet sind und parallel, vorzugsweise in der Öffnung (14) der jeweiligen Schiene (6), zur Außenfläche eines Abschnitts eines jeweiligen der flexiblen Riemen sind, der zwischen dem entsprechenden nachgelagerten Rädchen (33av) und dem entsprechenden vorgelagerten Rädchen (33am) liegt und in die entsprechende Zahnstange eingreift.

10. Vorrichtung nach einem der vorhergehenden Ansprüche, welche außerdem einen Gleitschuh zum Einrasten (50) des vorspringenden Elements umfasst, der gleitend in jede Schiene eingesetzt ist, in der ersten Translationsrichtung vor den Umlenkrollen (13), wobei der Gleitschuh zum Einrasten dafür ausgelegt ist, das vorspringende Element mit dem Verriegelungselement (6a, 6c) der entsprechenden Schiene (6) in Kontakt zu bringen und so das vorspringende Element in der Öffnung der Schiene zu verriegeln.

11. Verwendung einer Vorrichtung nach einem der vorhergehenden Ansprüche zum Abdecken einer Oberfläche (3), welche ausgewählt ist aus:
• einem Becken, das mit einer Flüssigkeit gefüllt ist oder nicht, wie etwa einem Schwimmbad, einem Becken zum Rückhalten, zur Aufbereitung oder zur Entsalzung von Wasser;
• einem Sportgelände, wie etwa einem Tennisplatz oder einem Cricketfeld;
• einer Fahrzeugkarosserie;
• einer Glasfläche, wie etwa einem Treibhaus, einem Wintergarten oder einem Fahrzeugfenster.

12. Verfahren zum Abdecken einer Oberfläche (3) mit einer Abdeckung (10) unter Verwendung einer Vorrichtung zur Abdeckung nach einem der vorhergehenden Ansprüche, wobei:
(a) die Trommel (2) sich an einem vorgelagerten Ende der abzudeckenden Oberfläche befindet, wobei ein Querrand der Abdeckung an diesem vorgelagerten, quer verlaufenden Ende der Oberfläche befestigt ist und der Rest der Abdeckung auf die Trommel aufgewickelt ist,
(b) Bewegen der Trommel in einer ersten Richtung über der abzudeckenden Oberfläche entlang der Schienen (6), und somit Abwickeln der Abdeckung, welche sich auf dem der Trommel vorgelagerten Oberflächenabschnitt ausbreitet, von der Trommel, und gleichzeitig Führen und Halten des vorspringenden Elements (12, 12d) jedes Längsrandes der Abdeckung gegenüber der Öffnung (14) der entsprechenden Schiene (6) im Einklang mit der Vorwärtsbewegung der Trommel,
(c) Inkontaktbringen des vorspringenden Elements mit dem Verriegelungselement in der Öffnung (14) der Schiene und Verriegeln des vorspringenden Elements an der Schiene.

## Claims

1. Device (1) for covering a surface (3) comprising:
(a) A substantially rectangular cover (10) with two longitudinal edges opposite one another and two transverse edges opposite one another, each longitudinal edge being provided with a projecting element (12, 12d) extending along said edge,
(b) a drum (2) of radius (R) that is mounted in rotation and is designed to roll up and unroll the cover (10), said drum (2) being mounted on a longitudinal translation mechanism along rails (6) arranged on both sides of said surface (3), each of which is made of a section with an opening (14) on one of the faces thereof that is oriented away from the surface to be covered, and being provided with a locking element (6a, 6c), said translation mechanism enabling the longitudinal translational movement of the drum in a first direction to unroll and deploy the cover over the surface (3) to be covered, and in a second direction to roll up and withdraw the cover from said surface (3),
(c) a deflection pulley (13) provided on each side of the surface to be covered to guide and position said projecting element (12, 12d) of each longitudinal edge of the cover opposite the opening (14) of the corresponding rail (6) during translational movement of the drum in the first direction to unroll the cover,
(d) a continuous locking system for locking the projecting element (12, 12b) of the longitudinal edges of the cover (10) in the opening (14) of said rails (6), enabling the projecting element to be locked with the locking element (6a, 6c) of the corresponding rail, once the projecting element has been engaged in the opening (14) and as the cover (10) is unrolled, and the projecting element to be released by disengaging from the locking element (6a, 6c) during translational movement of the drum in the second direction and as the cover is rolled up,
**characterized in that** the projecting element of each longitudinal edge of the cover includes a multitude of discrete elements (12d) distributed along each longitudinal edge, and **in that**
• the discrete elements (12d) have an average length (L) and are arranged side by side along the corresponding longitudinal edge, separated from one another by an average distance (d) that is equal to or greater than 0 and is preferably less than L, forming projecting units of average length (Lu = L + d), in which the average length (L) and average distance (d) are measured parallel to the rails (6) when the cover is deployed,
• each discrete element has a mechanical flexural rigidity at least two times greater than the mechanical flexural rigidity of the cover, and
• the average length (Lu) of the projecting units does not exceed 2 π R / N, in which N ≥ 10 is a real number.

2. Device according to Claim 1, in which
• the locking element has a flange (6a) partially closing the side of the opening (14) of each rail (6) adjacent to the surface to be covered, and
• each discrete element (12d) forms a hook with an L-shaped or J-shaped profile, having
o a portion continuously aligned with the surface of the cover and fastened to the corresponding longitudinal edge of the cover, and
o a transverse portion forming the hook, extending transversely in relation to the aligned portion
the hook being designed to hook the flange (6a).

3. Device according to Claim 1, in which
• the locking element includes one or more magnets (6c) positioned in the opening of each rail (6), and
• each discrete element (12d) has at least one ferromagnetic portion designed to face and be attracted to one or more magnets when a discrete element is inserted in the opening (14) of said rails (6).

4. Device according to Claim 1, in which
• the locking element has a flange (6a) partially closing the side of the opening (14) of each rail (6) opposite the surface to be covered, and
• each discrete element (12d) has a protrusion (12p) that extends away from the cover (10) and is aligned with the cover (10), the protrusion being designed to slide beneath the flange (6a) when a discrete element (12d) is inserted in the opening (14) of said rails (6).

5. Device according to Claim 1, in which the locking element and the discrete elements form a snap-fit assembly system comprising a protrusion snap-fitted into a recess when a discrete element (12d) is inserted into the opening (14) of said rails (6).

6. Device according to Claim 2, in which the locking system also includes two flexible belts (31) each of which can,
• during translational movement of the drum in the first direction and as the cover (10) is unrolled, be laid in the opening (14) of the corresponding rail once the discrete elements (12d) have been engaged and wedged in the opening of the rail, and
• during translational movement of the drum in the second direction, be removed from said opening (14), thereby releasing the discrete elements and enabling said discrete elements to be disengaged from the corresponding rail as the cover is rolled up.

7. Device according to any one of the preceding claims, in which the translation mechanism includes a trolley (21) that is mounted on the rails (6), that transversely overhangs the surface (3) to be covered, that carries the drum (2), and that includes the following at each of the ends thereof:
• a drive wheel (9) with a rotary shaft parallel to the rotary shaft of said drum (2);
• at least one downstream caster (33av) and one upstream caster (33am) resting on the rails (6) or on a surface adjacent to the rails, enabling the longitudinal translational movement of the trolley (21), in which the former is mounted downstream and the latter is mounted upstream of the drive wheel (9) in the first direction of movement, thereby forming a triangle of which the drive wheel (9) is the upper apex.

8. Device according to Claim 7, in which the downstream caster (33av) and the upstream caster (33am) rest on the corresponding rail (6) and in which the translation mechanism includes two flexible belts (31) fastened only at each of the ends (35) thereof to the four corners of the surface to be covered, and extend along the longitudinal edges of the surface to be covered in the following manner:
• the flexible belts are positioned in the opening (14) of the rails (6) in the lateral sections (31a) between a fastening point (35) and the caster (33av, 33am) closest to said fastening point, thereby locking the discrete elements (12d) inserted into the opening (14) in the lateral section (31a) containing the downstream caster (33av),
• the flexible belts grip the drive wheel (9) in the central section (31b) between the two casters (33av, 33am).

9. Device according to Claim 7, in which the translation mechanism includes:
• two flexible belts (31d) including an inner face and an outer face separated from the inner face by a thickness of the belts, both the inner and outer faces of each flexible belt being notched, the inner surface of each flexible belt gripping the upstream and downstream casters (33am, 33av) as well as the drive wheel (9), and
• two gear racks (31c) arranged along the longitudinal edges and parallel to the opening (14) of each rail (6), preferably inside said opening, the outer surface of a portion of each of the flexible belts between the corresponding downstream caster (33av) and the corresponding upstream caster (33am) meshing with the corresponding gear rack.

10. Device according to any one of the preceding claims, also including an engagement shoe (50) of the projecting element, inserted slidingly in each rail, upstream of the deflection pulleys (13) in the first direction of translational movement, said engagement shoe being designed to bring the projecting element into contact with the locking element (6a, 6c) of the corresponding rail (6) to lock the projecting element in the opening of the rail.

11. Use of a device according to any one of the preceding claims to cover a surface (3) selected from:
• a pool filled or otherwise with a liquid, such as a swimming pool, or a water retention, treatment or desalination pool,
• a sports field, such as a tennis court or cricket pitch,
• a vehicle body,
• a glazed surface such as a greenhouse, a conservatory or a window of a vehicle.

12. Method for covering a surface (3) with a cover (10) using a covering device according to any one of the preceding claims, in which:
(a) the drum (2) is at an upstream end of the surface to be covered, with one transverse edge of the cover being fastened to this upstream transverse end of the surface and the remainder of the cover being rolled about the drum,
(b) moving the drum in a first direction above the surface to be covered along the rails (6), thereby unrolling the cover from the drum and deploying the cover on the surface portion upstream of the drum, while simultaneously guiding and holding the projecting element (12, 12d) of each longitudinal edge of the cover opposite the opening (14) of the corresponding rail (6) as the drum moves forward,
(c) bringing the projecting element into contact with the locking element in the opening (14) of the rail and locking the projecting element to the rail.
